# EUROPÄISCHE PATENTANMELDUNG

(11) **EP 1 213 922 A1**
(43) Veröffentlichungstag der Anmeldung: **12.06.2002**
(21) Anmeldenummer: 00890365.0
(22) Anmeldetag: 06.12.2000
(51) Int. Cl.: H04N 7/00

(54) **Netzartiges Trägersystem**

(71) Anmelder: Rocco Handelsgesellschaft m.b.H., 1120 Wien (AT)
(72) Erfinder: Die Erfindernennung liegt noch nicht vor

(57) **Zusammenfassung**

Es ist ein netzartiges Trägersystem zur Montage von Aufnahmegeräten (z.B. Kameras) bei Sportveranstaltungen vorgesehen, von denen mindestens eine zur Aufzeichnung bzw. Übertragung aus der Vogelperspektive dient, wobei eine Synchronschaltung der einzelnen Aufnahmen angeordnet ist, welche in weiterer Folge mehrere Einzelbilder als Gesamtaufnahme wiedergeben. Für ein Freiluft-(out-door)Spielfeld (z.B. Fußballfeld) oder eine Rennbahn wird ein netzartiges Trägersystem errichtet, so daß eine Vielzahl von Aufnahmegeräten aus der Vogelperspektive angeordnet werden können.

Figur 2 zeigt

1) Rennbahn
2) das netzartige Trägersystem (hier z. B. horizontal über der Rennbahn)
3) Rennbahnrand
4) Säulen, die zur Befestigung des netzartigen Trägersystemes dienen (als Beispiel für individuelle Montagemöglichkeiten)

## Beschreibung

Auf dem Gebiet der visuellen Übertragung - seien es Direktübertragungen oder Aufzeichnungen - im Bereich von Spiel, Sport, Wettkämpfen oder sonstiger gleichartiger und anderer Veranstaltungen, gibt es eine Vielzahl von Möglichkeiten, diese dem Einzelnen, den Interessenten oder einer beliebig großen Anzahl von Personen zu übermitteln .

Die derzeitigen Übertragungsmöglichkeiten - auf dem Gebiet Sport sind dies z.B. Autorennen, Eishockey, Fußball, usw. - sind begrenzt, da die Kameras entweder in Höhe der Spieler ( z.B. Höhe der Fahrzeuge ) oder aus einem anderen schrägen Winkel ( z.B. Höhe der Zuschauerränge ) den Spielverlauf bzw. die Veranstaltung übertragen . Durch diesen Winkel kann die jeweilige Aufzeichnung bzw. Übertragung nur teilweise wiedergegeben werden .
So ist z.B. eine Karambolage beim Start einer Auto- oder Motorradveranstaltung und dergleichen, im Detail oft nicht erkennbar .

Insbesondere Sportveranstaltungen und darunter hauptsächlich jene, die im Fernsehen übertragen werden, stehen heute mit großem, finanziellen Aufwand und den damit verbundenen, wirtschaftlichen Risiken in Zusammenhang .
Schlecht einsehbare Situationen führen immer wieder zu Fehlentscheidungen der Verantwortlichen ( z.B. Kontrolleure, Rennleiter, Schiedsrichter, Spielleiter, Trainer, und dergleichen ) und können dadurch entscheidende finanzielle Verluste mit sich bringen bzw. Ausschreitung hervorrufen .

Eine neue Dimension der visuellen Übertragung - sowohl für die Allgemeinheit ( = das Publikum z.B. vor dem Fernseher und/oder dergleichen )- insbesondere jedoch für die jeweiligen Kontrolleure ( Rennleiter, Schiedsrichter, Spielleiter, Trainer usw. ) - ist mit den Kameras gegeben .

### Beschreibung:

Die Erfindung betrifft ein netzartiges Trägersystem zur Montage von Aufnahmegeräten (z.B. Kameras) bei Sportveranstaltungen, von denen mindestens eine zur Aufzeichnung bzw. Übertragung aus der Vogelperspektive dient, wobei auch eine Synchronschaltung der einzelnen Aufnahmen vorgesehen ist, welche in weiterer Folge mehrere Einzelbilder als Gesamtaufnahme wiedergeben.

Der bisherige Stand der Technik findet sich in folgenden Patenten:
- US 5 363 297 A: beschreibt ein Computersystem, bei der mindestens eine overhead Kamera vorgesehen ist, und soll Überlappungen regeln, die bei 1 oder mehreren Kamerabildern auftreten können, jedoch ist dieses Patent für den Innenbereich (Sporthalle) ausgelegt und nicht für den Außenbereich.
- US 5 444 478: beschreibt ein Überwachungskamara-System
- FR 2 730 837: beschreibt ein satelittengesteuertes System für die Aufzeichung eines Spielfeldes.

Aufgabe der Erfindung ist es, den Einsatz von Overheadkameras auch bei Freiluft-Sportanlagen zu ermöglichen.

Dies wird erfindungsgemäß dadurch erreicht, daß über einem Freiluft- (outdoor) Spielfeld (z.B. Fußballfeld) oder einer Rennbahn ein netzartiges Trägersystem vorgesehen ist, so daß eine Vielzahl von Aufnahmegeräten aus der Vogelperspektive angeordnet werden können.

Die Erfindung wir anhand eines Ausführungsbeispieles näher erläutert. Es zeigt:
Figur 1
   1) ein Fußballfeld (als Beispiel für Sport- oder sonstige Veranstaltungs orte)
   2) Das netzartige Trägersystem , dieses wird über dem jeweiligen Veranstaltungsbereich (1), in entsprechender ( unterschiedlicher ) Höhe, montiert bzw. gespannt.
      Je nach Bedarf ist das Material aus künstlichem oder natürlichem Werkstoff
   3) Kennzeichnung des Spielfeldrandes
Figur 2
   1) Rennbahn
   2) das netzartige Trägersystem (hier z. B. horizontal über der Rennbahn)
   3) Rennbahnrand
   4) Säulen, die zur Befestigung des netzartigen Trägersystemes dienen (als Beispiel für individuelle Montagemöglichkeiten)
Figur 3
   2) das netzartige Trägersystem
   5) mit den darauf montierten Aufnahmegeräten (z.B. Kameras), die auch in unterschiedlicher Höhe montiert werden können.
   6) die dafür notwendigen Kabelstränge, die zu einem
   7) Schaltkasten führen, um die Bilder anschließend synchron oder in Einzelbildern auf der
   8) "Video-Wall" (als Beispiel für ein beliebige Wiedergabegerät) zu zeigen

Bemerkung: Auch hier sind die Angaben der technischen Bestandteile wie Kabelstränge, Kameras usw. lediglich zur Erklärung dieser Erfindung angeführt.

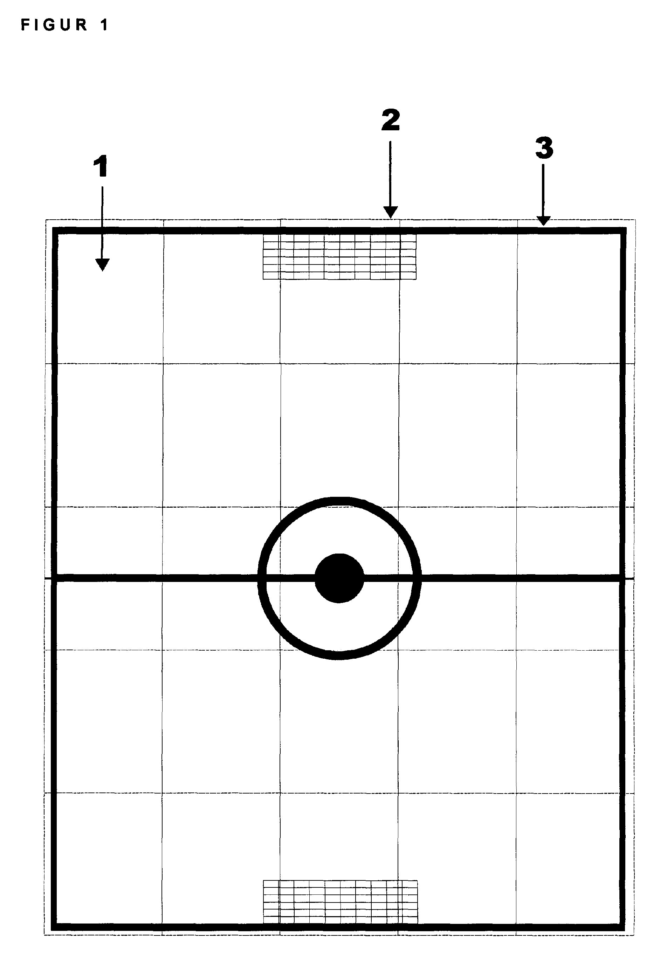

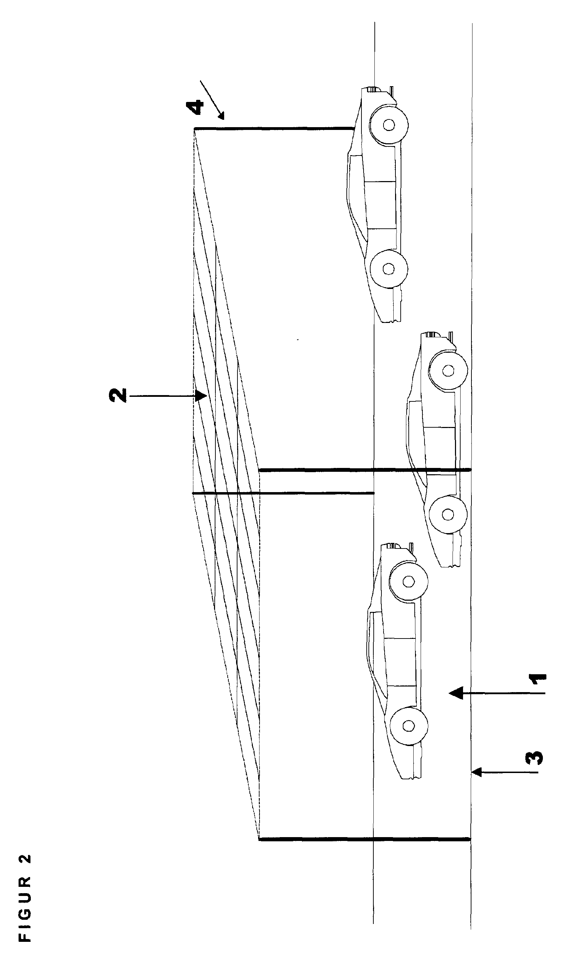

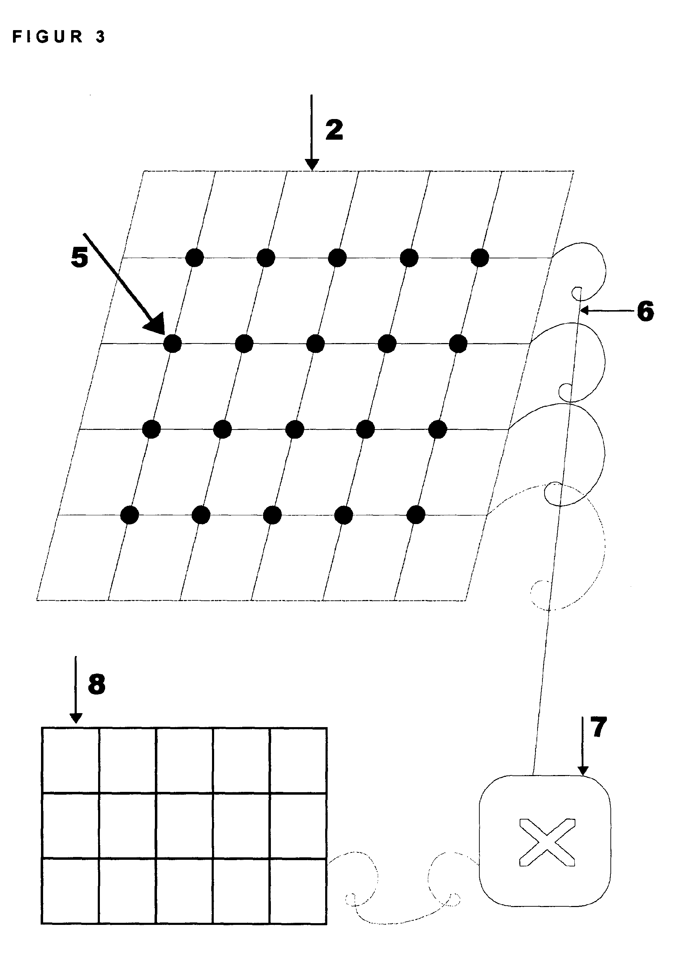

## Patentansprüche

1. Trägersystem zur Montage von Aufnahmegeräten
(z.B. Kameras) bei Sportveranstaltungen, von denen mindestens eine zur Aufzeichnung bzw. Übertragung aus der Vogelperspektive dient, wobei eine Synchronschaltung der einzelnen Aufnahmen vorgesehen ist, welche in weiterer Folge mehrere Einzelbilder als Gesamtaufnahme wiedergeben, **dadurch gekennzeichnet, daß** über einem Freiluft- (out-door) Spielfeld (1)(z. B. Fußballfeld) oder einer Rennbahn (1) ein netzartiges Trägersystem (2) vorgesehen ist, so daß eine Vielzahl von Aufnahmegeräten (5) aus der Vogelperspektive angeordnet werden können.

2. Trägersystem (2) nach Anspruch 1, **dadurch gekennzeichnet, daß** die Aufnahmegeräte (5) für die Aufzeichnung bzw. Übertragung aus der Vogelperspektive in unterschiedlicher Höhe angeordnet sind.
